# EUROPEAN PATENT APPLICATION

(11) **EP 4 561 241 A1**
(43) Date of publication of application: **28.05.2025**
(21) Application number: 24213687.7
(22) Date of filing: 18.11.2024
(51) Int. Cl.: H04W 72/51, H04W 72/0453

(54) **COMMUNICATION CONTROL SYSTEM, SERVER DEVICE, AND COMMUNICATION CONTROL METHOD**

(30) Priority: 27.11.2023 JP 2023199912
(71) Applicant: TOYOTA JIDOSHA KABUSHIKI KAISHA, Aichi-ken, 471-8571 (JP)
(72) Inventor: IWAHORI, Kento, Toyota-shi, 471-8571 (JP); YASUYAMA, Shogo, Toyota-shi, 471-8571 (JP); HASHIMOTO, Noriyuki, Toyota-shi, 471-8571 (JP); NOMURA, Yusuke, Toyota-shi, 471-8571 (JP)
(74) Representative: D Young & Co LLP

(57) **Abstract**

A server device (200) configured to execute wireless communication with a moving body (100) via a communication relay device (AP) is configured to use at least one of moving body information and manufacturing status information to decide a use frequency band from among frequency band candidates including a first frequency band and a second frequency band, and control the communication relay device to execute the wireless communication via the use frequency band.

## Description

### BACKGROUND OF THE INVENTION

### 1. Field of the Invention

The present disclosure relates to a communication control system, a server device, and a communication control method.

### 2. Description of Related Art

There is known a wireless communication device that switches a communication method in accordance with a traveling speed of a vehicle that is a communication target (Japanese Unexamined Patent Application Publication No. 2012-175686 (JP 2012-175686 A)). The wireless communication device disclosed in JP 2012-175686 A includes a wireless LAN communication unit and a transmission control protocol/Internet protocol (TCP/IP) communication unit, and switches a communication route used for wireless communication with a vehicle in accordance with the traveling speed of the vehicle.

### SUMMARY OF THE INVENTION

However, in JP 2012-175686 A, a plurality of communication routes having different communication methods needs to be prepared in advance, and there is a problem that a system configuration is complicated. The problem as described above is common not solely to the vehicle but also to any kind of moving body.

The present disclosure can be implemented as the following forms.

A first aspect of the present disclosure provides a communication control system configured to control wireless communication between a moving body and a communication device. The communication control system includes a frequency band decision unit configured to, by using at least one of moving body information and manufacturing status information, decide a use frequency band that is a frequency band to be used for the wireless communication from among frequency band candidates including a first frequency band and a second frequency band higher than the first frequency band, and a communication controller configured to control the wireless communication executed by the communication device to execute the wireless communication via the use frequency band. The moving body information is information regarding a state of the moving body, and the manufacturing status information is information regarding a manufacturing status of the moving body.

According to the first aspect of the present disclosure, the use frequency band that is the frequency band to be used for the wireless communication is decided from among the frequency band candidates including the first frequency band and the second frequency band, and the communication device is controlled to execute the wireless communication via the use frequency band. Therefore, a communication method can be easily switched by switching the use frequency band. The complication of the system configuration for the wireless communication between the moving body and the communication device can be suppressed as compared with a form in which the communication method is switched by switching the communication routes prepared in advance. Further, the use frequency band is decided by using at least one of the moving body information and the manufacturing status information. Therefore, the wireless communication between the moving body and the communication device can be implemented by using an appropriate frequency band in accordance with at least one of the moving body information and the manufacturing status information.

In the first aspect of the present disclosure, the moving body information may include moving body position information indicating a position of the moving body.

According to the first aspect of the present disclosure, since the moving body information includes the moving body position information, the wireless communication between the moving body and the communication device can be implemented by using an appropriate frequency band in accordance with the position of the moving body.

In the first aspect of the present disclosure, the frequency band decision unit may be configured to, by using the moving body position information, decide the second frequency band as the use frequency band in a case where the moving body is located in a work region as a region in which a work to the moving body is executed, and the frequency band decision unit may be configured to, by using the moving body position information, decide the first frequency band as the use frequency band in a case where the moving body is not located in the work region.

According to the first aspect of the present disclosure, the moving body position information is used, the second frequency band is decided as the use frequency band in a case where the moving body is located in the work region, and the first frequency band is decided as the use frequency band in a case where the moving body is not located in the work region. Therefore, the wireless communication between the moving body and the communication device can be implemented by using an appropriate frequency band depending on whether or not the moving body is located in the work region.

In the first aspect of the present disclosure, the work may include at least one of assembling a component to the moving body, painting the moving body, and inspecting the moving body.

According to the first aspect of the present disclosure, the work includes at least one of assembling the component to the moving body, painting the moving body, and inspecting the moving body. Therefore, the wireless communication between the moving body and the communication device can be implemented by using an appropriate frequency band depending on whether or not the moving body is located in a process of executing at least one of assembling the component to the moving body, painting the moving body, and inspecting the moving body.

In the first aspect of the present disclosure, the moving body information may include speed information indicating a speed of the moving body, the frequency band decision unit may be configured to, by using the speed information, specify whether the speed of the moving body is lower than a threshold value, the frequency band decision unit may be configured to decide the second frequency band as the use frequency band in a case where the speed of the moving body is lower than the threshold value, and the frequency band decision unit may be configured to decide the first frequency band as the use frequency band in a case where the speed of the moving body is equal to or higher than the threshold value.

According to the first aspect of the present disclosure, the speed information is used, the second frequency band is decided as the use frequency band in a case where the speed of the moving body is lower than the threshold value, and the first frequency band is decided as the use frequency band in a case where the speed of the moving body is equal to or higher than the threshold value. Therefore, the wireless communication between the moving body and the communication device can be implemented by using an appropriate frequency band in accordance with the speed of the moving body.

In the first aspect of the present disclosure, the frequency band decision unit may be configured to use, as the speed information, the speed of the moving body specified by using control information regarding movement control of the moving body.

According to the first aspect of the present disclosure, the speed of the moving body specified by using the control information is used as the speed information, so that the speed of the moving body can be easily specified, and the decision of an appropriate frequency band in accordance with the speed of the moving body can be easily implemented.

In the first aspect of the present disclosure, the manufacturing status information may include component information regarding a component to be attached to the moving body.

According to the first aspect of the present disclosure, since the manufacturing status information includes the component information, the wireless communication between the moving body and the communication device can be implemented by using an appropriate frequency band in accordance with an attachment state of the component to the moving body.

In the first aspect of the present disclosure, the frequency band decision unit may be configured to: by using the component information, specify whether the moving body is located in a process before a designated process that is designated in advance; decide the second frequency band as the use frequency band in a case where the moving body is located in the process before the designated process; and decide the first frequency band as the use frequency band in a case where the moving body is located in a process after the designated process.

According to the first aspect of the present disclosure, as the component information, whether or not the moving body is located in the process before the designated process is specified. In a case where the moving body is located in the process before the designated process, the second frequency band is decided as the use frequency band. In a case where the moving body is located in the process after the designated process, the first frequency band is decided as the use frequency band. Therefore, the wireless communication between the moving body and the communication device can be implemented by using an appropriate frequency band depending on whether or not the moving body is located in the process before the designated process.

In the first aspect of the present disclosure, the frequency band decision unit may be configured to: by using the component information, specify the number of attached components attached to the moving body; decide the second frequency band as the use frequency band in a case where the number of the attached components is smaller than a threshold value; and decide the first frequency band as the use frequency band in a case where the number of the attached components is equal to or larger than the threshold value.

According to the first aspect of the present disclosure, as the component information, the number of attached components is specified, and in a case where the number of attached components is smaller than the predetermined threshold value, the second frequency band is decided as the use frequency band. In a case where the number of attached components is equal to or larger than the threshold value, the first frequency band is decided as the use frequency band. Therefore, the wireless communication between the moving body and the communication device can be implemented by using an appropriate frequency band in accordance with the number of attached components.

In the first aspect of the present disclosure, the frequency band decision unit may be configured to: by using the component information, specify whether a designated component that is designated in advance has been already attached to the moving body; decide the second frequency band as the use frequency band in a case where the designated component has been not yet attached to the moving body; and decide the first frequency band as the use frequency band in a case where the designated component has been already attached to the moving body.

According to the first aspect of the present disclosure, as the component information, whether or not the designated component is already attached to the moving body is specified. In a case where the designated component is not yet attached to the moving body, the second frequency band is decided as the use frequency band. In a case where the designated component is already attached to the moving body, the first frequency band is decided as the use frequency band. Therefore, the wireless communication between the moving body and the communication device can be implemented by using an appropriate frequency band depending on whether or not the designated component is already attached to the moving body.

In the first aspect of the present disclosure, the manufacturing status information may include information regarding a takt time of a factory in which the moving body is manufactured, the frequency band decision unit may be configured to decide the second frequency band as the use frequency band in a case where the takt time is longer than a threshold value, and the frequency band decision unit may be configured to decide the first frequency band as the use frequency band in a case where the takt time is equal to or shorter than the threshold value.

According to the first aspect of the present disclosure, the manufacturing status information includes the information regarding the takt time of the factory in which the moving body is manufactured. In a case where the takt time is longer than the predetermined threshold value, the second frequency band is decided as the use frequency band. In a case where the takt time is equal to or shorter than the threshold value, the first frequency band is decided as the use frequency band. Therefore, the wireless communication between the moving body and the communication device can be implemented by using an appropriate frequency band in accordance with the takt time.

In the first aspect of the present disclosure, the communication controller may be configured to execute the wireless communication targeting large amount information in a case where the second frequency band is decided as the use frequency band. The communication controller may be configured to execute the wireless communication targeting small amount information in a case where the first frequency band is decided as the use frequency band. The large amount information may be larger than the small amount information.

According to the first aspect of the present disclosure, in a case where the second frequency band is decided as the use frequency band, the wireless communication targeting information having a larger amount of information than in a case where the first frequency band is used is executed. Therefore, as compared with a form in which the second frequency band is used solely in a case where the communication targeting information having a large amount of information is needed, a decrease in a degree of freedom of an execution timing of communication targeting information having a large amount of information can be suppressed.

In the first aspect of the present disclosure, the communication device may include a communication relay device, the communication relay device may be configured to relay the wireless communication between the moving body and an external device located outside the moving body.

According to the first aspect of the present disclosure, the wireless communication between the moving body and the communication relay device can be implemented by using an appropriate frequency band.

A second aspect of the present disclosure provides a server device configured to execute wireless communication with a moving body via a communication relay device. The server device includes a processor configured to: by using at least one of moving body information and manufacturing status information, decide a use frequency band that is a frequency band to be used for the wireless communication from among frequency band candidates including a first frequency band and a second frequency band higher than the first frequency band; and control the communication relay device to execute the wireless communication via the use frequency band. The moving body information is information regarding a state of the moving body, and the manufacturing status information is information regarding a manufacturing status of the moving body.

According to the second aspect of the present disclosure, the use frequency band that is the frequency band to be used for the wireless communication is decided from among the frequency band candidates including the first frequency band and the second frequency band, and the communication relay device is controlled to execute the wireless communication via the use frequency band. Therefore, the communication method can be easily switched by switching the use frequency band. The complication of the system configuration for the wireless communication between the moving body and the communication relay device can be suppressed as compared with a form in which the communication method is switched by switching the communication routes prepared in advance. Further, the use frequency band is decided by using at least one of the moving body information and the manufacturing status information. Therefore, the wireless communication between the moving body and the communication relay device can be implemented by using an appropriate frequency band in accordance with at least one of the moving body information and the manufacturing status information.

A third aspect of the present disclosure provides a communication control method for controlling wireless communication between a moving body and a communication device. The communication control method includes, by using at least one of moving body information and manufacturing status information, decide a use frequency band that is a frequency band to be used for the wireless communication from among frequency band candidates including a first frequency band and a second frequency band higher than the first frequency band, and controlling the communication device to execute the wireless communication via the use frequency band. The moving body information is information regarding a state of the moving body, and the manufacturing status information is information regarding a manufacturing status of the moving body.

According to the third aspect of the present disclosure, the use frequency band that is the frequency band to be used for the wireless communication is decided from among the frequency band candidates including the first frequency band and the second frequency band. The communication device is controlled to execute the wireless communication via the use frequency band. Therefore, the communication method can be easily switched by switching the use frequency band. The complication of the system configuration for the wireless communication between the moving body and the communication device can be suppressed as compared with a form in which the communication method is switched by switching the communication routes prepared in advance. Further, the use frequency band is decided by using at least one of the moving body information and the manufacturing status information. Therefore, the wireless communication between the moving body and the communication device can be implemented by using an appropriate frequency band in accordance with at least one of the moving body information and the manufacturing status information.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram showing a configuration of a control system according to a first embodiment;
FIG. 2 is a block diagram showing a configuration of the control system;
FIG. 3 is a flowchart showing a processing procedure of traveling control of a vehicle according to the first embodiment;
FIG. 4 is a flowchart showing a procedure of frequency band switching processing according to the first embodiment;
FIG. 5 is a flowchart showing a procedure of frequency band switching processing according to a second embodiment;
FIG. 6 is a flowchart showing a procedure of frequency band switching processing according to a third embodiment;
FIG. 7 is a block diagram showing a configuration of a control system according to a fourth embodiment; and
FIG. 8 is a flowchart showing a processing procedure of traveling control of a vehicle according to the fourth embodiment;

### DETAILED DESCRIPTION OF EMBODIMENTS

### A First Embodiment

### A-1 System Configuration

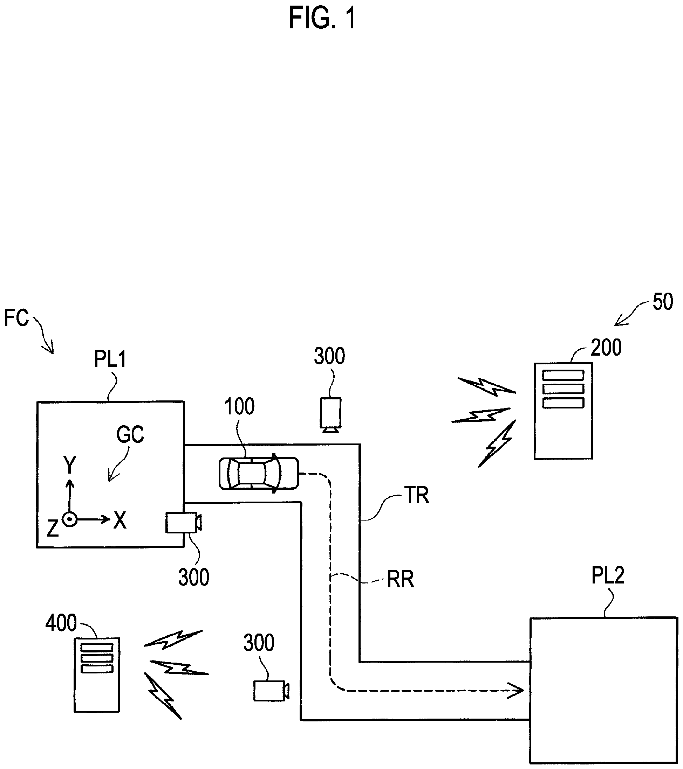

FIG. 1 is a conceptual diagram showing a configuration of a control system 50 according to a first embodiment. The control system 50 includes one or more vehicles 100 as moving bodies, a server device 200, and one or more external sensors 300.

In the present disclosure, the "moving body" means an object that can move, for example, a vehicle or an electric vertical take-off and landing aircraft (so-called flying car). The vehicle may be a vehicle that travels using wheels or a vehicle that travels using a caterpillar, and is, for example, a passenger car, a truck, a bus, a two-wheeled vehicle, a four-wheeled vehicle, a tank, and a construction vehicle. The vehicle includes a battery electric vehicle (BEV), a gasoline vehicle, a hybrid electric vehicle (HEV), a plug-in hybrid electric vehicle (PHEV), and a fuel cell electric vehicle (FCEV). In addition, in a case where the moving body is other than the vehicle, the expressions of "vehicle" and "car" in the present disclosure can be replaced with "moving body" as appropriate, and the expression of "travel" can be replaced with "move" as appropriate.

The vehicle 100 is configured to travel via unmanned driving. The "unmanned driving" means driving that does not depend on a traveling operation performed by an occupant. The traveling operation means an operation related to at least one of "traveling", "turning", and "stopping" of the vehicle 100. The unmanned driving is implemented by automatic or manual remote control using a device located outside the vehicle 100 or by autonomous control of the vehicle 100. The occupant who does not perform the traveling operation may get in the vehicle 100 that travels via the unmanned driving. Examples of the occupant who does not perform the traveling operation include a person who simply sits in a seat of the vehicle 100 and a person who performs work different from the traveling operation, such as assembly, inspection, or operation of switches, in a state of getting in the vehicle 100. The driving via the traveling operation performed by the occupant may be referred to as "manned driving".

In the present specification, the "remote control" includes "complete remote control" in which all the operations of the vehicle 100 are completely decided from the outside of the vehicle 100, and "partial remote control" in which a part of the operations of the vehicle 100 is decided from the outside of the vehicle 100. In addition, the "autonomous control" includes "complete autonomous control" in which the vehicle 100 autonomously controls the operation thereof without receiving any information from a device outside the vehicle 100, and "partial autonomous control" in which the vehicle 100 autonomously controls the operation thereof by using the information received from the device outside the vehicle 100. In the following description, the control for the traveling of the vehicle 100 implemented by the remote control or the autonomous control will also be referred to as "traveling control". The traveling control is an example of "movement control" according to the present disclosure.

In the present embodiment, the control system 50 is used in a factory FC that manufactures the vehicle 100. A reference coordinate system of the factory FC is a global coordinate system GC. That is, any position in the factory FC is represented by coordinates of X, Y, and Z in the global coordinate system GC. The factory FC includes a first place PL1 and a second place PL2. The first place PL1 and the second place PL2 are connected by a track TR on which the vehicle 100 can travel. A plurality of external sensors 300 is installed in the factory FC along the track TR. A position of each external sensor 300 in the factory FC is adjusted in advance. The vehicle 100 moves via the unmanned driving from the first place PL1 to the second place PL2 through the track TR.

The external sensor 300 is a sensor located outside the vehicle 100. The external sensor 300 in the present embodiment is a sensor that captures the vehicle 100 from the outside of the vehicle 100. Specifically, the external sensor 300 is configured by a camera. The camera as the external sensor 300 captures a captured image including the vehicle 100 and outputs the captured image as a detection result. The external sensor 300 includes a communication device (not shown), and can communicate with other devices, such as the server device 200, via wired communication or wireless communication.

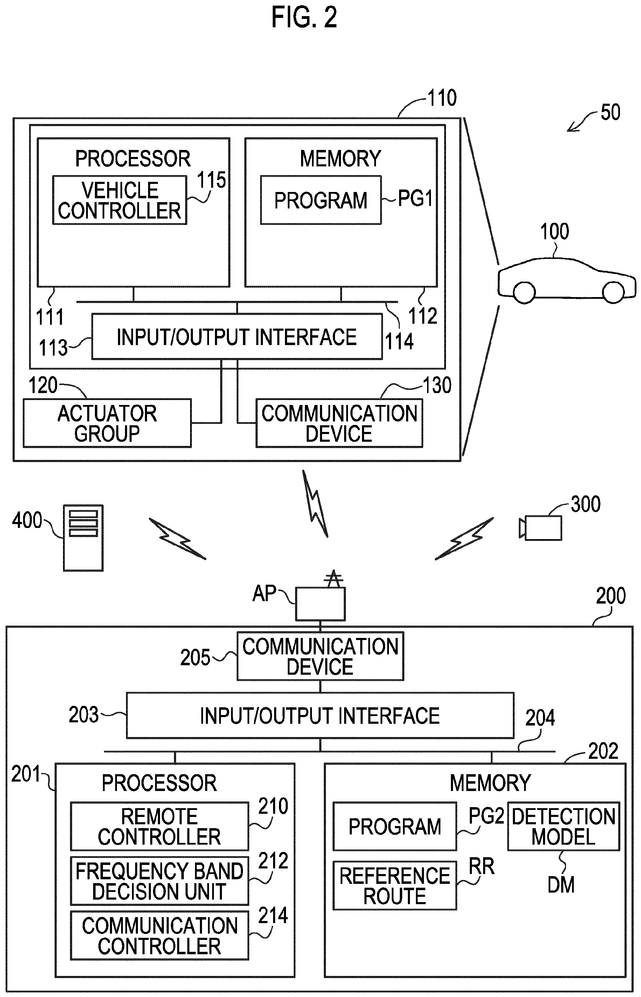

FIG. 2 is a block diagram showing a configuration of the control system 50. The vehicle 100 includes a vehicle control device 110 that controls each unit of the vehicle 100, an actuator group 120 including one or more actuators that are driven under control of the vehicle control device 110, and a communication device 130 that communicates with an external device, such as the server device 200, via the wireless communication. The actuator group 120 includes an actuator of a drive device for accelerating the vehicle 100, an actuator of a steering device for changing a traveling direction of the vehicle 100, and an actuator of a braking device for causing the vehicle 100 to decelerate. In addition, the vehicle 100 may include various sensors (not shown), such as a vehicle speed sensor and a yaw rate sensor.

The vehicle control device 110 is configured by a computer including a processor 111, a memory 112, an input/output interface 113, and an internal bus 114. The processor 111, the memory 112, and the input/output interface 113 are connected to be bidirectionally communicable with each other via the internal bus 114. The actuator group 120 and the communication device 130 are connected to the input/output interface 113. The processor 111 implements various functions including a function as a vehicle controller 115 by executing a program PG1 stored in the memory 112.

The vehicle controller 115 controls the actuator group 120 to cause the vehicle 100 to travel. The vehicle controller 115 can cause the vehicle 100 to travel by controlling the actuator group 120 using a traveling control signal received from the server device 200. The traveling control signal is a control signal for causing the vehicle 100 to travel. In the present embodiment, the traveling control signal includes the acceleration and a steering angle of the vehicle 100 as parameters. In other embodiments, the traveling control signal may include a speed of the vehicle 100 as the parameter instead of or in addition to the acceleration of the vehicle 100.

The server device 200 is configured by a computer including a processor 201, a memory 202, an input/output interface 203, and an internal bus 204. The processor 201, the memory 202, and the input/output interface 203 are connected to be bidirectionally communicable with each via the internal bus 204. The communication device 205 for communicating with various devices outside the server device 200 is connected to the input/output interface 203. The communication device 205 can communicate with the vehicle 100 via the wireless communication through an access point AP, and can communicate with each external sensor 300 via the wired communication or the wireless communication.

The access point AP relays the wireless communication between the vehicle 100 and the server device 200. In the present embodiment, the server device 200 is an example of an "external device" according to the present disclosure. The access point AP relays the wireless communication between the server device 200 and the external sensor 300 and the wireless communication between the server device 200 and a process management device 400 described later. In the present embodiment, the access point AP functions as a wireless local area network (LAN) access point AP. The access point AP executes wireless LAN communication with the vehicle 100 and also executes communication with the server device 200 via a wired network including a router device (not shown). The access point AP may execute the wireless LAN communication with the server device 200. The access point AP is an example of a "communication relay device" according to the present disclosure. The communication between the server device 200 and the external sensor 300 and the communication between the server device 200 and the process management device 400 described later may be implemented by the wired communication instead of the wireless communication via the access point AP.

In the present embodiment, the access point AP is configured to execute the communication by switching a plurality of predetermined frequency bands in response to control by a communication controller 214 described later. In the present embodiment, the access point AP is configured to execute the communication by switching between a 2.4 GHz band and a 5.0 GHz band as the frequency band to be used for the wireless communication. Here, the 2.4 GHz band is an example of a "first frequency band" according to the present disclosure, and the 5.0 GHz band is an example of a "second frequency band" according to the present disclosure. In general, communication using a lower frequency band has a feature that radio waves are unlikely to be shielded even in a case where an obstacle is present as compared with communication using a higher frequency band. On the other hand, the communication using a higher frequency band has a feature that high-speed communication is possible as compared with the communication using a lower frequency band. The access point AP is not limited to the 2.4 GHz band and the 5.0 GHz band. Any frequency band, such as a 6 GHz band, may be used for the communication in addition to the 2.4 GHz band and the 5.0 GHz band or instead of at least any one of the 2.4 GHz band and the 5.0 GHz band. The communication device 130 and the communication device 205 automatically switch the frequency band to be used, in response to the switching of a use frequency band in the access point AP.

The processor 201 implements various functions including a function as a remote controller 210 by executing a program PG2 stored in the memory 202. In the present embodiment, the processor 201 functions as the remote controller 210, a frequency band decision unit 212, and a communication controller 214.

The remote controller 210 acquires the detection result of the sensor, generates the traveling control signal for controlling the actuator group 120 of the vehicle 100 by using the detection result, and transmits the traveling control signal to the vehicle 100. As a result, the vehicle 100 is caused to travel via the remote control. A processing procedure of traveling control implemented by the remote control according to the present embodiment will be described later. The remote controller 210 may generate, for example, a control signal for controlling various accessories provided in the vehicle 100 or actuators that operate various kinds of equipment, such as a wiper, a power window, or a lamp, in addition to the traveling control signal and output the generated control signal. That is, the remote controller 210 may operate the various kinds of equipment or the various accessories via the remote control.

The frequency band decision unit 212 uses at least any one of vehicle information and manufacturing status information to decide a frequency band (hereinafter, also be referred to as "use frequency band") to be used for the wireless communication between the server device 200 and the vehicle 100 from among frequency band candidates including the 2.4 GHz band and the 5.0 GHz band at the access point AP. The "vehicle information" means information regarding a state of the vehicle 100. The vehicle information is an example of "moving body information" according to the present disclosure. The "manufacturing status information" means information regarding a manufacturing status of the vehicle 100. Specific examples of the vehicle information and the manufacturing status information will be described later. The communication controller 214 controls the access point AP to execute the wireless communication via the use frequency band. Specific processing in the frequency band decision unit 212 and the communication controller 214 will be described later. The control system 50 according to the present embodiment including the server device 200 including the frequency band decision unit 212 and the communication controller 214 also functions as a "communication control system" that controls the wireless communication between the vehicle 100 and the access point AP.

The process management device 400 is a device that manages a manufacturing process of the vehicle 100. The process management device 400 is configured by a computer. The process management device 400 acquires information from various kinds of equipment in the factory FC to generate information regarding the manufacturing process of the vehicle 100 that is a product. In the following description, the information regarding the manufacturing process of the product will be referred to as process information. In the present embodiment, the process information includes information indicating a time, a place, a worker, a product, and a kind related to work scheduled to be executed, information indicating a time, a place, a worker, a product, and a kind related to work that has been executed, and information indicating a progress status of the work. The process management device 400 includes a communication device (not shown), and transmits the process information to the server device 200 via the wired communication or the wireless communication. The function of the process management device 400 may be implemented in the same device as the server device 200.

### A-2 Traveling Control

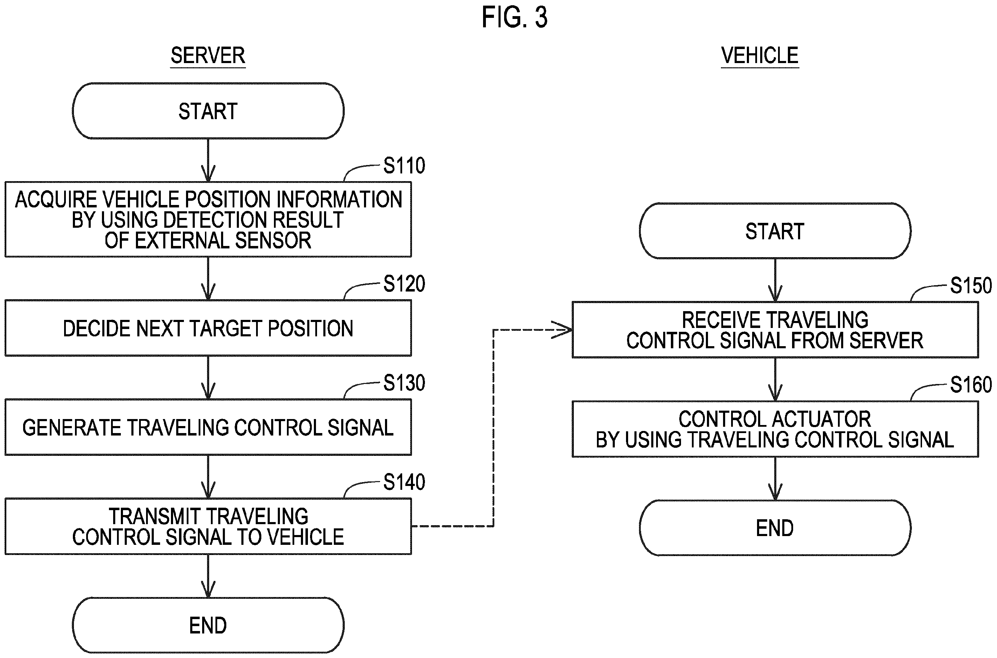

FIG. 3 is a flowchart showing the processing procedure of the traveling control of the vehicle 100 according to the first embodiment. In step S110, the remote controller 210 acquires vehicle position information of the vehicle 100 by using the detection result output from the external sensor 300. The vehicle position information is position information that is a basis for generating the traveling control signal. In the present embodiment, the vehicle position information includes a position and a direction of the vehicle 100 in the global coordinate system GC of the factory FC. Specifically, in step S110, the remote controller 210 acquires the vehicle position information by using the captured image acquired from the camera that is the external sensor 300.

Specifically, in step S 110, the remote controller 210 detects, for example, an outer shape of the vehicle 100 from the captured image. For example, the remote controller 210 calculates coordinates of a positioning point of the vehicle 100 in a coordinate system of the captured image, that is, a local coordinate system, and converts the calculated coordinates into the coordinates in the global coordinate system GC to acquire the position of the vehicle 100. The outer shape of the vehicle 100 included in the captured image can be detected, for example, by inputting the captured image to a detection model DM utilizing artificial intelligence. The detection model DM is prepared inside the control system 50 or outside the control system 50, and is stored in advance in the memory 202 of the server device 200. Examples of the detection model DM include a trained machine learning model that has been trained to implement any one of semantic segmentation and instance segmentation. As the machine learning model, for example, a convolutional neural network (hereinafter, a CNN) that has been trained by supervised learning using a training data set can be used. The training data set has, for example, a plurality of training images including the vehicle 100 and a label indicating whether each region in the training image is a region indicating the vehicle 100 or a region indicating a region other than the vehicle 100. When the CNN is trained, parameters of the CNN are preferably updated by backpropagation (error backpropagation method) to reduce an error between an output result of the detection model DM and the label. The remote controller 210 can acquire the direction of the vehicle 100 by estimating the direction of the vehicle 100 based on a direction of a movement vector of the vehicle 100 calculated from a positional change in a feature point of the vehicle 100 between frames of the captured image by using, for example, an optical flow method.

In step S120, the remote controller 210 decides a target position to which the vehicle 100 should head next. In the present embodiment, the target position is represented by the coordinates of X, Y, and Z in the global coordinate system GC. A reference route RR that is a route on which the vehicle 100 should travel is stored in advance in the memory 202 of the server device 200. The route is represented by a node indicating a departure point, a node indicating a passing point, a node indicating a destination, and a link connecting the respective nodes. The remote controller 210 decides the target position to which the vehicle 100 should head next by using the vehicle position information and the reference route RR. The remote controller 210 decides the target position on the reference route RR ahead of a current position of the vehicle 100.

In step S130, the remote controller 210 generates the traveling control signal for causing the vehicle 100 to travel toward the decided target position. The remote controller 210 calculates a traveling speed of the vehicle 100 from the transition of the position of the vehicle 100 and compares the calculated traveling speed with a target speed. As a whole, the remote controller 210 decides the acceleration such that the vehicle 100 accelerates in a case where the traveling speed is lower than the target speed, and decides the acceleration such that the vehicle 100 decelerates in a case where the traveling speed is higher than the target speed. In a case where the vehicle 100 is located on the reference route RR, the remote controller 210 decides the steering angle and the acceleration such that the vehicle 100 does not deviate from the reference route RR. In a case where the vehicle 100 is not located on the reference route RR, in other words, in a case where the vehicle 100 deviates from the reference route RR, the remote controller 210 decides the steering angle and the acceleration such that the vehicle 100 returns to the reference route RR.

In step S140, the remote controller 210 transmits the generated traveling control signal to the vehicle 100. The remote controller 210 repeatedly executes the acquisition of the position of the vehicle 100, the decision of the target position, the generation of the traveling control signal, the transmission of the traveling control signal, and the like, at a predetermined cycle.

In step S 150, the vehicle controller 115 receives the traveling control signal transmitted from the server device 200. In step S160, the vehicle controller 115 controls the actuator group 120 by using the received traveling control signal, to cause the vehicle 100 to travel at the acceleration and the steering angle represented by the traveling control signal. The vehicle controller 115 repeatedly executes the reception of the traveling control signal and the control of the actuator group 120, at a predetermined cycle. With the control system 50 according to the present embodiment, the vehicle 100 can be caused to travel via the remote control, and the vehicle 100 can be caused to move without using transport equipment, such as a crane or a conveyor.

### A-3 Frequency Band Switching Processing

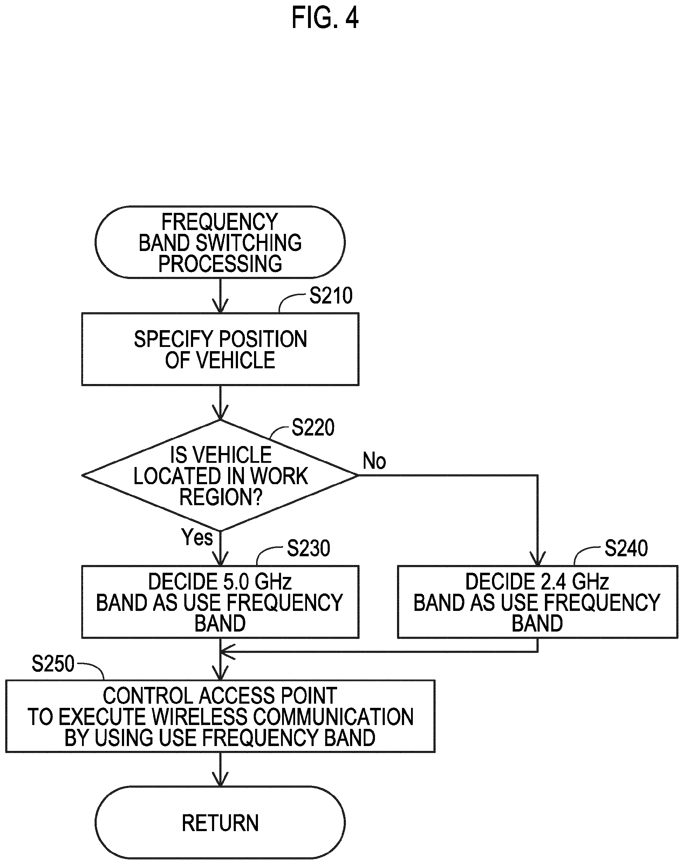

FIG. 4 is a flowchart showing a procedure of frequency band switching processing according to the first embodiment. In the present embodiment, the above-described traveling control is executed as basic control, and the frequency band switching processing is executed in combination with the above-described traveling control. The frequency band switching processing is repeatedly executed during a period in which the server device 200 is operating.

In step S210, the frequency band decision unit 212 specifies the position of the vehicle 100. In the present embodiment, the frequency band decision unit 212 specifies the position of the vehicle 100 by using the vehicle position information acquired by the remote controller 210. The vehicle position information is an example of "moving body position information" according to the present disclosure. The vehicle position information is included in the above-described vehicle information.

In step S220, the frequency band decision unit 212 determines whether or not the vehicle 100 is located in a work region. The "work region" means a region that is predetermined as a region in which some work is executed on the vehicle 100, and means, for example, a region in which work, such as assembling a component to the vehicle 100, painting the vehicle 100, or inspecting the vehicle 100, is executed. In the following description, a region in which the transport of the vehicle 100 between the work regions or the transport of the vehicle 100 after the completion is executed, and the work on the vehicle 100 is not executed will also be referred to as a "transport region".

In a case where a determination is made that the vehicle 100 is located in the work region (step S220: Yes), in step S230, the frequency band decision unit 212 decides the 5.0 GHz band as the use frequency band. In the work region, in addition to the transmission of the control signal for controlling various operations in the vehicle 100, the following information is exchanged. The information is the download of a program or the process information for executing the assembly of the component, the painting, the inspection, or the like described above to the vehicle 100, or the upload of an inspection result, a work execution status of the work, or the like from the vehicle 100. As described above, in the work region, information having a larger amount of information is communicated than in the transport region in which basically solely the traveling control signal is transmitted. Therefore, the frequency band decision unit 212 decides, as the use frequency band, the 5.0 GHz band in which the communication at a higher speed is possible than in the 2.4 GHz band.

On the other hand, in a case where a determination is made that the vehicle 100 is not located in the work region (step S220: No), in other words, in a case where the vehicle 100 is located in the transport region, in step S240, the frequency band decision unit 212 decides the 2.4 GHz band as the use frequency band. In the work region, the work is executed on the vehicle 100, and thus the vehicle 100 is stopped or travels at a low speed, whereas in the transport region, the work is not executed on the vehicle 100. Therefore, the vehicle 100 travels at a higher speed than in the work region, and has a higher frequency in which the vehicle 100 travels across the obstacle, such as a column or a component shelf, than in the work region. Therefore, the frequency band decision unit 212 decides, as the use frequency band, the 2.4 GHz band in which radio waves are unlikely to be shielded even in a case where the obstacle is present than in the 5.0 GHz band.

In step S250, the communication controller 214 controls the access point AP to execute the wireless communication via the use frequency band. The server device 200 repeatedly executes the above-described processing.

The control system 50 according to the first embodiment decides the use frequency band from among the 2.4 GHz band and the 5.0 GHz band, and controls the access point AP to execute the wireless communication via the use frequency band. Therefore, the communication method can be easily switched by switching the use frequency band. The complication of the system configuration for the wireless communication between the vehicle 100 and the access point AP can be suppressed as compared with a form in which the communication method is switched by switching a plurality of communication routes prepared in advance. Further, since the use frequency band is decided by using at least one of the vehicle information and the manufacturing status information, the wireless communication between the vehicle 100 and the access point AP can be implemented by using an appropriate frequency band in accordance with at least one of the vehicle information and the manufacturing status information.

Further, since the vehicle information includes the vehicle position information, the wireless communication between the vehicle 100 and the access point AP can be implemented by using an appropriate frequency band in accordance with the position of the vehicle 100.

In addition, the vehicle position information is used, the 5.0 GHz band is decided as the use frequency band in a case where the vehicle 100 is located in the work region, and the 2.4 GHz band is decided as the use frequency band in a case where the vehicle 100 is not located in the work region. Therefore, the wireless communication between the vehicle 100 and the access point AP can be implemented by using an appropriate frequency band depending on whether or not the vehicle 100 is located in the work region.

The work executed in the work region includes at least one of assembling the component to the vehicle 100, painting the vehicle 100, and inspecting the vehicle 100. Therefore, the wireless communication between the vehicle 100 and the access point AP can be implemented by using an appropriate frequency band depending on whether or not the vehicle 100 is located in the region in which at least one of assembling the component to the vehicle 100, painting the vehicle 100, and inspecting the vehicle 100 is executed.

### B Second Embodiment

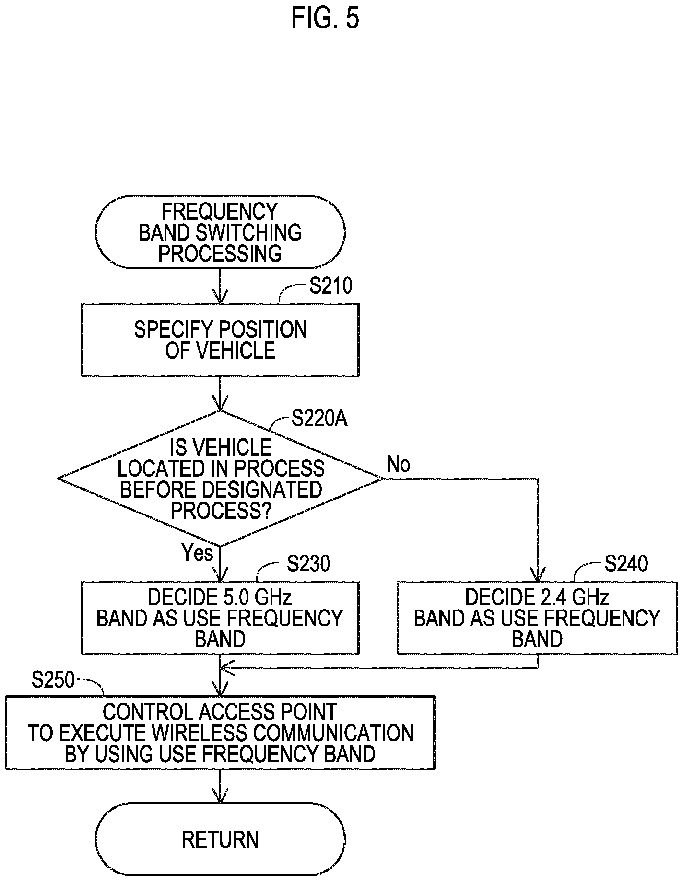

FIG. 5 is a flowchart showing a procedure of frequency band switching processing according to a second embodiment. The server device 200 according to the second embodiment is different from the server device 200 according to the first embodiment in that step S220A is executed instead of step S220, as shown in FIG. 5. Since the system configuration of the server device 200 according to the second embodiment and other procedures in the frequency band switching processing are the same as those of the server device 200 according to the first embodiment, the same configurations and the same procedures are denoted by the same reference numerals, and detailed description thereof will be omitted.

In step S220A, the frequency band decision unit 212 determines whether or not the vehicle 100 is located in a process before a process designated in advance (hereinafter, also referred to as a "designated process"). The frequency band decision unit 212 determines that the vehicle 100 is located in the designated process, for example, in a case where the vehicle 100 is located in a region corresponding to the process designated as the designated process. The frequency band decision unit 212 may use the process information received from the process management device 400 to specify the process in which the vehicle 100 is located.

The "designated process" means a process in which an assembly state of the component with respect to the vehicle 100 is a predetermined state. That is, the assembly state of the component with respect to the vehicle 100 can be specified depending on whether or not the vehicle 100 is located in the process before the designated process. For example, a process in which the number of components attached to the vehicle 100 is equal to or larger than a predetermined number or a process in which a large component, such as a body shell, is attached to the vehicle 100 can be designated as the designated process. As described above, the designated process is determined in relation to the component attached to the vehicle 100, so that whether or not the vehicle 100 is located in the process before the designated process is an example of "component information" according to the present disclosure. The component information is included in the above-described manufacturing status information.

In a case where a determination is made that the vehicle 100 is located in the process before the designated process (step S220A: Yes), in step S230, the frequency band decision unit 212 decides the 5.0 GHz band as the use frequency band. In a case where the vehicle 100 is located in the process before the designated process, the number of components attached to the vehicle 100 is smaller than in a case where the vehicle 100 is located in a process after the designated process. In other words, few obstacles are present between the communication device 130 provided in the vehicle 100 for which the communication is executed, and the access point AP. In the above-described case, since the radio waves are unlikely to be shielded, the frequency band decision unit 212 decides, as the use frequency band, the 5.0 GHz band in which high-speed communication is possible.

On the other hand, in a case where a determination is made that the vehicle 100 is not located in the process before the designated process (step S220A: No), in other words, in a case where the vehicle 100 is located in the process after the designated process, the frequency band decision unit 212 decides the 2.4 GHz band as the use frequency band in step S240. In a case where the vehicle 100 is located in the process after the designated process, the number of components attached to the vehicle 100 is larger than in a case where the vehicle 100 is located in the process before the designated process. In addition, many obstacles are present between the communication device 130 provided in the vehicle 100 for which the communication is executed, and the access point AP. In this way, in the above-described case, since the radio waves are likely to be shielded, the frequency band decision unit 212 decides, as the use frequency band, the 2.4 GHz band in which the radio waves are unlikely to be shielded even in a case where the obstacle is present.

With the server device 200 according to the second embodiment, whether or not the vehicle 100 is located in the process before the designated process is specified as the component information. In a case where the vehicle 100 is located in the process before the designated process, the 5.0 GHz band is decided as the use frequency band. In a case where the vehicle 100 is located in the process after the designated process, the 2.4 GHz band is decided as the use frequency band. Therefore, the wireless communication between the vehicle 100 and the access point AP can be implemented by using an appropriate frequency band depending on whether or not the vehicle 100 is located in the process before the designated process.

### C Third Embodiment

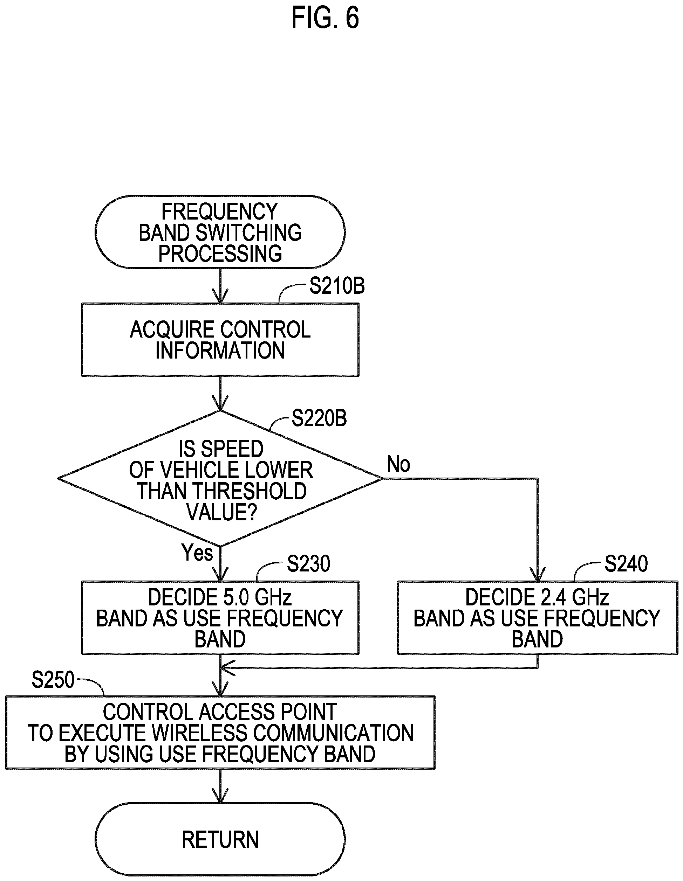

FIG. 6 is a flowchart showing a procedure of frequency band switching processing according to a third embodiment. The server device 200 according to the third embodiment is different from the server device 200 according to the first embodiment in that step S210B and step S220B are executed instead of step S210 and step S220, as shown in FIG. 6. Since the system configuration of the server device 200 according to the third embodiment and other procedures in the frequency band switching processing are the same as those of the server device 200 according to the first embodiment, the same configurations and the same procedures are denoted by the same reference numerals, and detailed description thereof will be omitted.

In step S210B, the frequency band decision unit 212 acquires control information of the vehicle 100. The "control information" means information regarding the traveling control of the vehicle 100. In the present embodiment, the frequency band decision unit 212 acquires, as the control information, the traveling control signal generated by the remote controller 210. As described above, since the vehicle 100 travels in response to the received traveling control signal, the frequency band decision unit 212 can specify a state of the traveling control to be executed in the future in the vehicle 100 by acquiring the traveling control signal. In the present embodiment, both the remote controller 210 that generates the traveling control signal, and the frequency band decision unit 212 are implemented in the same server device 200. Therefore, the frequency band decision unit 212 can easily acquire the control information without communicating with the device outside the server device 200, and can easily specify the speed of the vehicle 100.

In step S220B, the frequency band decision unit 212 determines whether or not the speed of the vehicle 100 implemented by the acceleration represented by the traveling control signal is lower than a predetermined threshold value. In a case where a determination is made that the speed of the vehicle 100 is lower than the threshold value (step S220B: Yes), in step S230, the frequency band decision unit 212 decides the 5.0 GHz band as the use frequency band. In a case where the speed of the vehicle 100 is lower than the threshold value, the frequency in which the vehicle 100 travels across the obstacle, such as the column or the component shelf, is lower than in a case where the speed of the vehicle 100 is equal to or higher than the threshold value. In this way, in the above-described case, since the frequency in which the vehicle 100 travels across the obstacle is low and the radio waves are unlikely to be shielded, the frequency band decision unit 212 decides, as the use frequency band, the 5.0 GHz band in which the high-speed communication is possible. In a case where the traveling control signal includes the speed of the vehicle 100 as the parameter, in this step, the frequency band decision unit 212 may determine whether or not the speed of the vehicle 100 represented by the traveling control signal is equal to or lower than the predetermined threshold value.

On the other hand, in a case where a determination is made that the speed of the vehicle 100 is not lower than the threshold value (step S220B: No), in other words, in a case where the speed of the vehicle 100 is equal to or higher than the threshold value, in step S240, the frequency band decision unit 212 decides the 2.4 GHz band as the use frequency band. In a case where the speed of the vehicle 100 is equal to or higher than the threshold value, the frequency in which the vehicle 100 travels across the obstacle, such as the column or the component shelf, is higher than in a case where the speed of the vehicle 100 is lower than the threshold value. In this way, in the above-described case, since the radio waves are likely to be shielded, the frequency band decision unit 212 decides, as the use frequency band, the 2.4 GHz band in which the radio waves are unlikely to be shielded.

With the server device 200 according to the third embodiment, the speed information is used, and the 5.0 GHz band is decided as the use frequency band in a case where the speed of the vehicle 100 is smaller than the threshold value. In a case where the speed of the vehicle 100 is equal to or higher than the threshold value, the 2.4 GHz band is decided as the use frequency band. Therefore, the wireless communication between the vehicle 100 and the access point AP can be implemented by using an appropriate frequency band in accordance with the speed of the vehicle 100.

In addition, since the speed of the vehicle 100 specified by using the control information is used as the speed information, the speed of the vehicle 100 can be easily specified, and the decision of an appropriate frequency band in accordance with the speed of the vehicle 100 can be easily implemented.

### D Fourth Embodiment

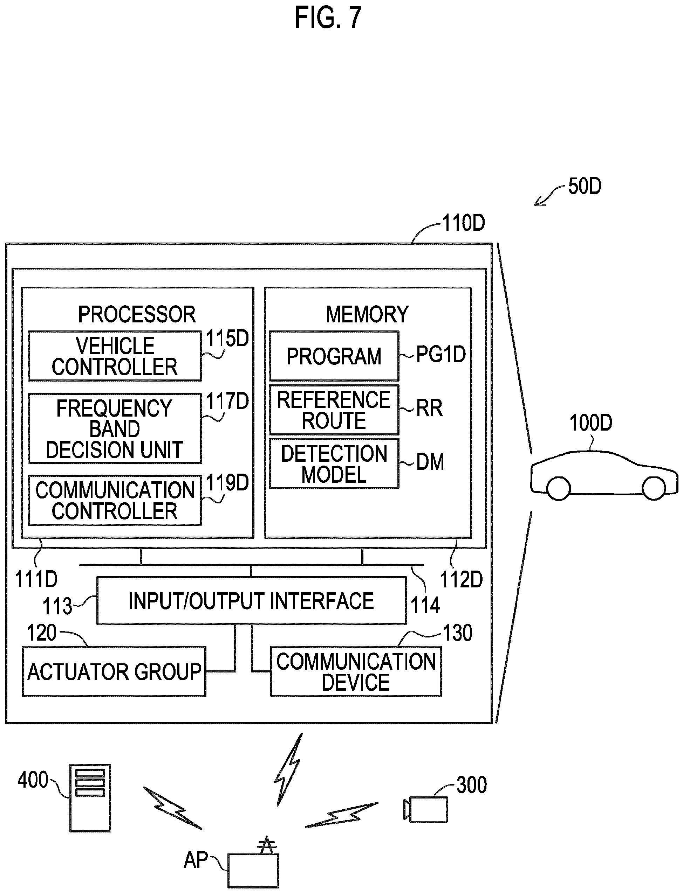

FIG. 7 is a descriptive view showing a schematic configuration of a control system 50D according to a fourth embodiment. In the present embodiment, the control system 50D is different from the control system 50 according to the first embodiment in that the server device 200 is not provided. In addition, a vehicle 100D according to the present embodiment can travel via the autonomous control of the vehicle 100D. Other configurations are the same as the configurations of the first embodiment unless otherwise described.

In the present embodiment, a processor 111D of the vehicle control device 110D functions as a vehicle controller 115D by executing a program PG1D stored in a memory 112D. The vehicle controller 115D acquires an output result of the external sensor 300, generates the traveling control signal by using the output result, and outputs the generated traveling control signal to operate the actuator group 120. As a result, the vehicle 100D can be caused to travel via the autonomous control. In the present embodiment, the external sensor 300 is an example of an "external device" according to the present disclosure. In the present embodiment, the detection model DM or the reference route RR is stored in advance in the memory 112D in addition to the program PG1D.

Further, in the present embodiment, the processor 111D executes the program PG1D stored in the memory 112D. As a result, the processor 111D also functions as a frequency band decision unit 117D and a communication controller 119D as functional units corresponding to the frequency band decision unit 212 and the communication controller 214 provided in the server device 200 according to the first embodiment. In the present embodiment, the vehicle 100D may acquire the process information from the process management device 400 in the same manner as the server device 200 according to the first embodiment. In this case, the process management device 400 is an example of an "external device" according to the present disclosure. With the vehicle 100D configured as described above, the same effects as the effects of the first embodiment can be obtained without using the server device 200.

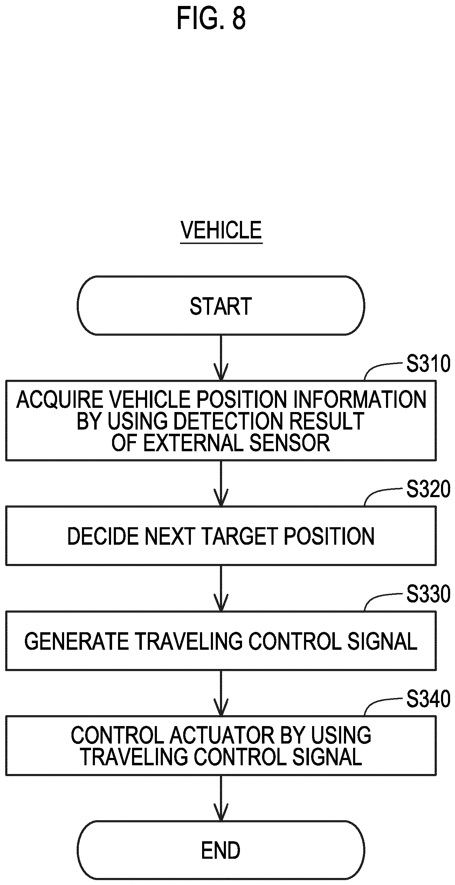

FIG. 8 is a flowchart showing a processing procedure of the traveling control of the vehicle 100D according to the fourth embodiment. In step S310, the vehicle controller 115D acquires the vehicle position information by using the detection result output from the camera that is the external sensor 300. In step S320, the vehicle controller 115D decides the target position to which the vehicle 100D should head next. In step S330, the vehicle controller 115D generates the traveling control signal for causing the vehicle 100D to travel toward the decided target position. In step S340, the vehicle controller 115D controls the actuator group 120 by using the generated traveling control signal, to cause the vehicle 100D to travel in response to the parameter represented by the traveling control signal. The vehicle controller 115D repeatedly executes the acquisition of the vehicle position information, the decision of the target position, the generation of the traveling control signal, and the control of the actuator, at a predetermined cycle. With the control system 50D according to the present embodiment, the vehicle 100D can be caused to travel via the autonomous control of the vehicle 100D even in a case where the vehicle 100D is not remotely controlled by the server device 200.

### E Other Embodiments

### E1

In the first embodiment, the download of the program or the process information may be executed each time when needed in each process, or may be executed in a batch for a plurality of processes at any predetermined timing. The upload of the inspection result, the work execution status, or the like from the vehicle 100 may be executed each time when the work in each process is completed, or may be executed in a batch for the processes at any predetermined timing. In each of the above-described forms, the frequency band decision unit 212 may decide the 5.0 GHz band as the use frequency band in a case where the upload or the download of the information is executed, in other words, in a case where the information having a larger amount of information is communicated than in other cases. The frequency band decision unit 212 may decide the 2.4 GHz band as the use frequency band in a process in which the upload or the download of the information is not executed even in the work region. According to the above-described form, an appropriate frequency band can be used in accordance with the amount of information of the information exchanged between the vehicle 100 and the other devices.

The download of the information to the vehicle 100 and the upload of the information from the vehicle 100 may be executed when the communication using the 5.0 GHz band is executed due to a factor other than the position of the vehicle 100, such as the attachment state of the component with respect to the vehicle 100 or the speed of the vehicle 100, as described in each of the above-described embodiments. In other words, in a case where the communication using the 5.0 GHz band is executed, the communication controller 214 executes the wireless communication between the vehicle 100 and the external device, which targets the information having a larger amount of information than in case where the 2.4 GHz band is used. According to the above-described form, since the 5.0 GHz band is used regardless of whether or not the vehicle 100 needs to execute the communication targeting the information having a large amount of information, the communication targeting the information having a large amount of information can be executed when the high-speed communication is possible. Therefore, a decrease in a degree of freedom of an execution timing of the communication targeting the information having a large amount of information in the vehicle 100 can be suppressed.

### E2

In the first embodiment, the frequency band decision unit 212 decides the use frequency band depending on whether or not the vehicle 100 is located in the work region, but the present disclosure is not limited thereto. The frequency band decision unit 212 may decide the use frequency band depending on whether or not the vehicle 100 is located in a predetermined region regardless of whether or not the region is the work region. For example, the frequency band decision unit 212 may decide the 2.4 GHz band as the use frequency band in a case where the vehicle 100 is located in a region that is predetermined as a region in which many obstacles, such as the column or the component shelf, are present. The frequency band decision unit 212 may decide the 5.0 GHz band as the use frequency band in a case where the vehicle 100 is not located in the region. According to the above-described form, the wireless communication between the vehicle 100 and the access point AP can be implemented by using a more appropriate frequency band in accordance with the predetermined region, in addition to whether or not the vehicle 100 is located in the work region.

The frequency band decision unit 212 may decide the frequency band in accordance with a content of the inspection to be executed in an inspection process that is a region in the work region in which the inspection is executed. For example, since information uploaded in an abnormal sound inspection of the vehicle 100 includes sound information, the amount of information is larger than the information uploaded in a process of inspecting the presence or absence of liquid leakage or the like by visual determination. As described above, the frequency band decision unit 212 may decide the 5.0 GHz band as the use frequency band in a case where the vehicle 100 is located in the inspection process in which the amount of information of the uploaded information is larger than in the other inspection processes. The frequency band decision unit 212 may decide the 2.4 GHz band as the use frequency band in a case where the vehicle 100 is located in other inspection processes. According to the above-described form, the wireless communication between the vehicle 100 and the access point AP can be implemented by using an appropriate frequency band in accordance with the content of the inspection to be executed in the inspection process.

### E3

In the second embodiment, the frequency band decision unit 212 decides the use frequency band depending on whether or not the vehicle 100 is located in the process before the designated process, but the present disclosure is not limited thereto. For example, the frequency band decision unit 212 may use the process in which the vehicle 100 is located, to specify the number of components attached to the vehicle 100 (hereinafter, also referred to as "the number of attached components") up to the process in which the vehicle 100 is located. The frequency band decision unit 212 may decide the 2.4 GHz band as the use frequency band in a case where the number of attached components is equal to or larger than a predetermined threshold value. The frequency band decision unit 212 may decide the 5.0 GHz band as the use frequency band in a case where the number of attached components is smaller than the threshold value. As described above, the reason is that, as the number of attached components is larger, the number of obstacles present between the communication device 130 provided in the vehicle 100 for which the communication is executed, and the access point AP is larger, and the radio waves are more likely to be shielded. The number of attached components is an example of "component information" according to the present disclosure. According to the above-described form, the wireless communication between the vehicle 100 and the access point AP can be implemented by using an appropriate frequency band in accordance with the number of attached components.

In a case where a component designated in advance (hereinafter, also referred to as a "designated component") is already attached to the vehicle 100, the frequency band decision unit 212 may decide the 2.4 GHz band as the use frequency band. The frequency band decision unit 212 may decide the 5.0 GHz band as the use frequency band in a case where the component is not yet attached. The "designated component" means a component in which the assembly state of the component with respect to the vehicle 100 is in the predetermined state due to the attachment. That is, the assembly state of the component with respect to the vehicle 100 can be specified depending on whether or not the designated component is already attached to the vehicle 100. For example, a component in which the number of components attached to the vehicle 100 is equal to or larger than a predetermined number due to the attachment of the component, or a large component, such as the body shell, can be designated as the designated component. Whether or not the designated component is already attached to the vehicle 100 is included in "component information" according to the present disclosure. Whether or not the designated component is already attached to the vehicle 100 can be specified, for example, by analyzing the captured image of the vehicle 100 acquired by the external sensor 300. According to the above-described form, the wireless communication between the vehicle 100 and the access point AP can be implemented by using an appropriate frequency band depending on whether or not the designated component is already attached to the vehicle 100.

### E4

In the third embodiment, the frequency band decision unit 212 acquires the traveling control signal generated by the remote controller 210, and decides the use frequency band by using the speed of the vehicle 100 specified by using the traveling control signal. However, the present disclosure is not limited thereto. The frequency band decision unit 212 may acquire the speed of the vehicle 100 detected by the vehicle speed sensor mounted in the vehicle 100 or the vehicle speed sensor installed near the track TR, and decide the use frequency band by using the acquired speed of the vehicle 100. According to the above-described form, the same effects as the effects of the third embodiment can be obtained. In addition, the frequency band can be decided by using a speed of the real vehicle 100, and the wireless communication between the vehicle 100 and the access point AP can be implemented by using a more appropriate frequency band in accordance with the state of the traveling control of the real vehicle 100.

### E5

In the above-described embodiment, the frequency band decision unit 212 decides the use frequency band depending on the position or the speed of the vehicle 100, but the present disclosure is not limited thereto. The frequency band decision unit 212 may decide the use frequency band in accordance with the manufacturing status of the vehicle 100 in the factory FC. For example, the frequency band decision unit 212 may decide the use frequency band depending on whether or not a preset target manufacturing time is longer than a predetermined threshold value. The "target manufacturing time" means a target value of a manufacturing time for processing one vehicle 100. The target manufacturing time is determined based on the number of vehicles 100 to be produced in an operating time of the factory FC, and may be referred to as a "takt time". The target manufacturing time can be managed, for example, by the process management device 400 and can be appropriately adjusted in accordance with a target manufacturing number per day and the manufacturing statuses of the preceding and following processes. The target manufacturing time may be included in "manufacturing status information" according to the present disclosure.

In a case where the target manufacturing time is short, in order to reduce the time needed for the transport of the vehicle 100, control of increasing the speed of the vehicle 100 to be faster than in a case where the target manufacturing time is long is executed. That is, in a case where the target manufacturing time is short, a frequency in which the vehicle 100 travels across the obstacle is higher than in a case where the target manufacturing time is long. Therefore, the frequency band decision unit 212 decides the 2.4 GHz band as the use frequency band in a case where the target manufacturing time is equal to or shorter than the threshold value, and decides the 5.0 GHz band as the use frequency band in a case where the target manufacturing time is longer than the threshold value. According to the above-described form, the wireless communication between the vehicle 100 and the access point AP can be implemented by using an appropriate frequency band in accordance with the target manufacturing time.

The frequency band decision unit 212 may decide the use frequency band by using information regarding the inspection results of a plurality of vehicles 100 manufactured in the factory FC. In the present embodiment, the frequency band decision unit 212 uses the number of vehicles 100 of which the inspection result has a problem, as the information regarding the inspection result, and decides the use frequency band depending on whether or not the number of vehicles 100 is equal to or larger than a predetermined threshold value. The vehicle 100 of which the inspection result has a problem is returned to an inspection line again after a portion with the problem is corrected, so that a delay occurs with respect to the target manufacturing time. Therefore, in order to suppress such a delay with respect to the target manufacturing time, control of increasing the speed of the vehicle 100 to be higher in a case where the number of vehicles 100 of which the inspection result has a problem is equal to or larger than the threshold value than in a case where the number of vehicles 100 of which the inspection result has a problem is smaller than the threshold value is executed. That is, in a case where the number of vehicles 100 is equal to or larger than the threshold value, the frequency in which the vehicle 100 travels across the obstacle is higher than in a case where the number of vehicles 100 is smaller than the threshold value. Therefore, the frequency band decision unit 212 decides the 2.4 GHz band as the use frequency band in a case where the number of vehicles 100 is equal to or larger than the threshold value, and decides the 5.0 GHz band as the use frequency band in a case where the number of vehicles 100 is smaller than the threshold value. According to the above-described form, the wireless communication between the vehicle 100 and the access point AP can be implemented by using an appropriate frequency band in accordance with the inspection results of the vehicles 100 manufactured in the factory FC.

The frequency band decision unit 212 may decide the frequency band depending on whether or not a production line of the vehicle 100 is stopped in the factory FC. In a case where the production line is stopped, a delay occurs for a time during which the production line is stopped, with respect to the target manufacturing time. Therefore, in order to suppress such a delay with respect to the target manufacturing time, in a case where the production line is stopped, control of increasing the speed of the vehicle 100 to be higher after the production line is restored than before the production line is stopped is executed. That is, in a case where the production line is stopped, the frequency in which the vehicle 100 travels across the obstacle is higher than before the production line is stopped. Therefore, the frequency band decision unit 212 decides the 2.4 GHz band as the use frequency band in a case where the production line is stopped, and decides the 5.0 GHz band as the use frequency band in a case where the production line is not stopped. Also in the above-described form, the wireless communication between the vehicle 100 and the access point AP can be implemented by using an appropriate frequency band in accordance with the manufacturing status of the vehicle 100 in the factory FC.

### E6

In the first to third embodiments, the server device 200 executes the wireless communication with the vehicle 100 via the access point AP, but the present disclosure is not limited thereto. The server device 200 may execute direct wireless communication with the vehicle 100. Also in the above-described form, the same effects as the effects of the above-described embodiment can be obtained. The server device 200 according to the above-described form is an example of a "communication device" according to the present disclosure.

In the fourth embodiment, the vehicle 100 executes the wireless communication with the external device, such as the external sensor 300 or the process management device 400, via the access point AP, but the present disclosure is not limited thereto. The vehicle 100 may execute direct wireless communication with the external device, such as the external sensor 300 or the process management device 400. Also in the above-described form, the same effects as the effects of the above-described embodiment can be obtained. Each of the external devices, such as the external sensor 300 and the process management device 400 according to the above-described form, is an example of a "communication device" according to the present disclosure.

### E7

In each of the above-described embodiments, the external sensor 300 is the camera. However, the external sensor 300 need not be the camera, and may be, for example, a light detection and ranging (LiDAR). In this case, the detection result output by the external sensor 300 may be three-dimensional point cloud data representing the vehicle 100. In this case, the server device 200 or the vehicle 100 may acquire the vehicle position information by template matching using the three-dimensional point cloud data as the detection result, and reference point cloud data prepared in advance.

### E8

In the first embodiment, the processing from the acquisition of the vehicle position information to the generation of the traveling control signal is executed by the server device 200. On the other hand, at least a part of the processing from the acquisition of the vehicle position information to the generation of the traveling control signal may be executed by the vehicle 100. For example, the following forms (1) to (3) may be adopted.
(1) The server device 200 may acquire the vehicle position information, decide the target position to which the vehicle 100 should head next, and generate the route from the current position of the vehicle 100 represented by the acquired vehicle position information to the target position. The server device 200 may generate a route to the target position between the current position and the destination or may generate a route to the destination. The server device 200 may transmit the generated route to the vehicle 100. The vehicle 100 may generate the traveling control signal for causing the vehicle 100 to travel on the route received from the server device 200, and control the actuator group 120 by using the generated traveling control signal.
(2) The server device 200 may acquire the vehicle position information and transmit the acquired vehicle position information to the vehicle 100. The vehicle 100 may decide the target position to which the vehicle 100 should head next and generate the route from the current position of the vehicle 100 represented by the received vehicle position information to the target position. The vehicle 100 may generate the traveling control signal for causing the vehicle 100 to travel on the generated route, and control the actuator group 120 by using the generated traveling control signal.
(3) In the above-described forms (1) and (2), an internal sensor may be mounted in the vehicle 100, and a detection result output from the internal sensor may be used for at least one of the generation of the route and the generation of the traveling control signal. The internal sensor is a sensor mounted in the vehicle 100. The internal sensor may include, for example, a sensor that detects a motion state of the vehicle 100, a sensor that detects an operation state of each unit of the vehicle 100, and a sensor that detects a surrounding environment of the vehicle 100. Specifically, the internal sensor may include, for example, a camera, a LiDAR, a millimeter wave radar, an ultrasound sensor, a GPS sensor, an acceleration sensor, and a gyro sensor. For example, in the above-described form (1), the server device 200 may acquire the detection result of the internal sensor and reflect the detection result of the internal sensor in the route when the route is generated. In the above-described form (1), the vehicle 100 may acquire the detection result of the internal sensor and reflect the detection result of the internal sensor to the traveling control signal when the traveling control signal is generated. In the above-described form (2), the vehicle 100 may acquire the detection result of the internal sensor and reflect the detection result of the internal sensor to the route when the route is generated. In the above-described form (2), the vehicle 100 may acquire the detection result of the internal sensor and reflect the detection result of the internal sensor to the traveling control signal when the traveling control signal is generated.

### E9

In the fourth embodiment, an internal sensor may be mounted in the vehicle 100D, and a detection result output from the internal sensor may be used for at least one of the generation of the route and the generation of the traveling control signal. For example, the vehicle 100D may acquire the detection result of the internal sensor and reflect the detection result of the internal sensor to the route when the route is generated. The vehicle 100D may acquire the detection result of the internal sensor and reflect the detection result of the internal sensor to the traveling control signal when the traveling control signal is generated.

### E10

In the fourth embodiment, the vehicle 100D acquires the vehicle position information by using the detection result of the external sensor 300. In contrast, the internal sensor may be mounted in the vehicle 100D. The vehicle 100D may acquire the vehicle position information by using the detection result of the internal sensor or may decide the target position to which the vehicle 100D should head next. The vehicle 100D may generate the route from the current position of the vehicle 100D represented by the acquired vehicle position information to the target position. The vehicle 100D may generate the traveling control signal for traveling on the generated route or may control the actuator group 120 by using the generated traveling control signal. In this case, the vehicle 100D can travel without using the detection result of the external sensor 300 at all. In addition, the vehicle 100D may acquire a target arrival time or traffic jam information from the outside of the vehicle 100D and reflect the target arrival time or the traffic jam information to at least one of the route and the traveling control signal. All the functional configurations of the control system 50D may be provided in the vehicle 100D. That is, the processing implemented by the control system 50D in the present disclosure may be implemented solely by the vehicle 100D.

### E11

In the first embodiment, the server device 200 automatically generates the traveling control signal to be transmitted to the vehicle 100. In contrast, the server device 200 may generate the traveling control signal to be transmitted to the vehicle 100 in response to an operation of an external operator who is located outside the vehicle 100. For example, the external operator may operate a control device including a display that displays the captured image output from the external sensor 300, a steering wheel, an accelerator pedal, and a brake pedal for remotely operating the vehicle 100, and a communication device that communicates with the server device 200 via the wired communication or the wireless communication. The server device 200 may generate the traveling control signal in accordance with the operation applied to the control device.

### E12

In each of the above-described embodiments, the vehicle 100 need solely have a configuration capable of moving via the unmanned driving, and may have a form of a platform having a configuration described later, for example. Specifically, the vehicle 100 need solely include at least the vehicle control device 110 and the actuator group 120 in order to exhibit the three functions of "running", "turning", and "stopping" via the unmanned driving. In a case where the vehicle 100 acquires the information from the outside for the unmanned driving, the vehicle 100 need solely further include the communication device 130. That is, the vehicle 100 that can move via the unmanned driving need not be equipped with at least a part of interior components, such as a driver's seat and a dashboard. The vehicle 100 need not be equipped with at least a part of exterior components, such as a bumper or a fender, and need not be equipped with the body shell. In this case, the vehicle 100 may be equipped with the remaining components, such as the body shell, before the vehicle 100 is shipped from the factory FC. The vehicle 100 may be equipped with the remaining components, such as the body shell, after the vehicle 100 is shipped from the factory FC in a state where the vehicle 100 is not equipped with the remaining components, such as the body shell. The respective component may be equipped from any direction, such as an upper side, a lower side, a front side, a rear side, a right side, or a left side of the vehicle 100, and may be equipped from the same direction or different directions. The position decision can be made for the form of the platform in the same manner as the vehicle 100 according to the first embodiment.

### E13

The vehicle 100 may be manufactured by combining a plurality of modules. The module means a unit configured by a plurality of components assembled in accordance with a part or the function of the vehicle 100. For example, the platform of the vehicle 100 may be manufactured by combining a front module that constitutes a front portion of the platform, a center module that constitutes a center portion of the platform, and a rear module that constitutes a rear portion of the platform. In addition, the number of modules constituting the platform is not limited to three, and may be two or less or four or more. In addition to or instead of the components constituting the platform, the components constituting a portion of the vehicle 100 that is different from the platform may be modularized. In addition, various modules may include any exterior component, such as a bumper or a grille, or any interior component, such as the seat or a console. In addition to the vehicle 100, a moving body of any aspect may be manufactured by combining the modules. Such a module may be manufactured by joining the components via welding, a fastener, or the like, or may be manufactured by integrally molding at least a part of the components constituting the module as one component via casting. A molding method for integrally molding one component, particularly a relatively large component, is also called giga casting or mega casting. For example, the front module, the center module, and the rear module may be manufactured by using giga casting.

### E14

The transport of the vehicle 100 using the traveling of the vehicle 100 via the unmanned driving will also be referred to as "autonomous transport". A configuration for implementing the autonomous transport will also be referred to as "vehicle remote control autonomous transport system". A production method for producing the vehicle 100 by using the autonomous transport will also be referred to as "autonomous production". In the autonomous production, for example, in the factory FC that manufactures the vehicle 100, at least a part of the transport of the vehicle 100 is implemented by the autonomous transport.

### E15

In each of the above-described embodiments, a part or all of the functions and the processing that are implemented by software may be implemented by hardware. Alternatively, a part or all of the functions and the processing that are implemented by hardware may be implemented by software. As the hardware for implementing various functions in each of the above-described embodiments, various circuits, such as an integrated circuit or a discrete circuit, may be used.

The present disclosure is not limited to the above-described embodiments, and can be implemented with various configurations without departing from the spirit of the present disclosure. For example, the technical features in the embodiments corresponding to the technical features in each form described in the section of SUMMARY OF THE INVENTION can be replaced or combined as appropriate to solve a part or all of the above-described objects, or to achieve a part or all the above-described effects. In a case where the technical features are not described as being always needed in the present specification, the features can be deleted as appropriate.

## Claims

1. A communication control system (50) configured to control wireless communication between a moving body (100) and a communication device (200), the communication control system (50) comprising:
a frequency band decision unit (212) configured to, by using at least one of moving body information and manufacturing status information, decide a use frequency band that is a frequency band to be used for the wireless communication from among frequency band candidates including a first frequency band, and a second frequency band higher than the first frequency band; and
a communication controller (214) configured to control the wireless communication executed by the communication device (200) to execute the wireless communication via the use frequency band, wherein
the moving body information is information regarding a state of the moving body (100), and
the manufacturing status information is information regarding a manufacturing status of the moving body (100).

2. The communication control system (50) according to claim 1, wherein the moving body information includes moving body position information indicating a position of the moving body (100).

3. The communication control system (50) according to claim 2, wherein:
the frequency band decision unit (212) is configured to, by using the moving body position information, decide the second frequency band as the use frequency band in a case where the moving body (100) is located in a work region as a region in which a work to the moving body (100) is executed on; and
the frequency band decision unit (212) is configured to, by using the moving body position information, decide the first frequency band as the use frequency band in a case where the moving body (100) is not located in the work region.

4. The communication control system (50) according to claim 3, wherein the work includes at least one of assembling a component to the moving body (100), painting the moving body (100), and inspecting the moving body (100).

5. The communication control system (50) according to claim 1, wherein:
the moving body information includes speed information indicating a speed of the moving body (100);
the frequency band decision unit (212) is configured to, by using the speed information, specify whether the speed of the moving body (100) is lower than a threshold value;
the frequency band decision unit (212) is configured to decide the second frequency band as the use frequency band in a case where the speed of the moving body (100) is lower than the threshold value; and
the frequency band decision unit (212) is configured to decide the first frequency band as the use frequency band in a case where the speed of the moving body (100) is equal to or higher than the threshold value.

6. The communication control system (50) according to claim 5, wherein the frequency band decision unit (212) is configured to use, as the speed information, the speed of the moving body (100) specified by using control information regarding movement control of the moving body (100).

7. The communication control system (50) according to claim 1, wherein the manufacturing status information includes component information regarding a component to be attached to the moving body (100).

8. The communication control system (50) according to claim 7, wherein the frequency band decision unit (212) is configured to:
by using the component information, specify whether the moving body (100) is located in a process before a designated process that is designated in advance;
decide the second frequency band as the use frequency band in a case where the moving body (100) is located in the process before the designated process; and
decide the first frequency band as the use frequency band in a case where the moving body (100) is located in a process after the designated process.

9. The communication control system (50) according to claim 7, wherein the frequency band decision unit (212) is configured to:
by using the component information, specify the number of attached components attached to the moving body (100);
decide the second frequency band as the use frequency band in a case where the number of the attached components is smaller than a threshold value; and
decide the first frequency band as the use frequency band in a case where the number of the attached components is equal to or larger than the threshold value.

10. The communication control system (50) according to claim 7, wherein the frequency band decision unit (212) is configured to:
by using the component information, specify whether a designated component that is designated in advance has been already attached to the moving body (100);
decide the second frequency band as the use frequency band in a case where the designated component has been not yet attached to the moving body (100); and
decide the first frequency band as the use frequency band in a case where the designated component has been already attached to the moving body (100).

11. The communication control system (50) according to claim 1, wherein:
the manufacturing status information includes information regarding a takt time of a factory in which the moving body (100) is manufactured;
the frequency band decision unit (212) is configured to decide the second frequency band as the use frequency band in a case where the takt time is longer than a threshold value; and
the frequency band decision unit (212) is configured to decide the first frequency band as the use frequency band in a case where the takt time is equal to or shorter than the threshold value.

12. The communication control system (50) according to claim 1 or 2, wherein:
the communication controller (214) is configured to execute the wireless communication targeting large amount information in a case where the second frequency band is decided as the use frequency band;
the communication controller (214) is configured to execute the wireless communication targeting small amount information in a case where the first frequency band is decided as the use frequency band; and
the large amount information is larger than the small amount information.

13. The communication control system (50) according to claim 1 or 2, wherein:
the communication device (200) includes a communication relay device (AP); and
the communication relay device (AP) is configured to relay the wireless communication between the moving body (100) and an external device located outside the moving body (100).

14. A server device (200) configured to execute wireless communication with a moving body (100) via a communication relay device (AP), the server device comprising a processor (201) configured to:
by using at least one of moving body information and manufacturing status information, decide a use frequency band that is a frequency band to be used for the wireless communication from among frequency band candidates including a first frequency band and a second frequency band higher than the first frequency band; and
control the communication relay device to execute the wireless communication via the use frequency band, wherein
the moving body information is information regarding a state of the moving body (100), and
the manufacturing status information is information regarding a manufacturing status of the moving body (100).

15. A communication control method for controlling wireless communication between a moving body (100) and a communication device (200), the communication control method comprising:
by using at least one of moving body information and manufacturing status information, decide a use frequency band that is a frequency band to be used for the wireless communication from among frequency band candidates including a first frequency band and a second frequency band higher than the first frequency band; and
controlling the communication device (200) to execute the wireless communication via the use frequency band, wherein
the moving body information is information regarding a state of the moving body (100), and
the manufacturing status information is information regarding a manufacturing status of the moving body (100).
